# EUROPEAN PATENT SPECIFICATION

(11) **EP 4 336 639 B1**
(45) Date of publication and mention of the grant of the patent: **29.10.2025**
(21) Application number: 22867705.0
(22) Date of filing: 07.09.2022
(51) Int. Cl.: H01M 50/296, H01R 24/60, H01R 13/52

(54) **BATTERY MODULE AND BATTERY PACK AND VEHICLE COMPRISING SAME**
BATTERIEMODUL SOWIE BATTERIEPACK UND FAHRZEUG DAMIT
MODULE DE BATTERIE, BLOC-BATTERIE ET VÉHICULE LE COMPRENANT

(30) Priority: 13.09.2021 KR 20210122087
(43) Date of publication of application: 13.03.2024
(73) Proprietor: LG Energy Solution, Ltd., Seoul 07335 (KR)
(72) Inventor: KIM, Kwang-Mo, Daejeon 34122 (KR); PARK, Myung-Ki, Daejeon 34122 (KR); PARK, Won-Kyoung, Daejeon 34122 (KR); SEONG, Jun-Yeob, Daejeon 34122 (KR); JUNG, Hye-Mi, Daejeon 34122 (KR)
(74) Representative: Goddar, Heinz J.
(86) International application number: PCT/KR2022/013464
(87) International publication number: WO 2023/038437

(56) References cited:
- EP-A1- 4 216 354
- EP-B1- 1 314 224
- WO-A1-2017/036313
- CA-A- 1 242 497
- CN-U- 208 608 292
- DE-A1- 102013 001 971
- KR-A- 20100 082 532
- KR-A- 20160 041 311
- KR-A- 20200 080 076
- US-A- 5 197 903
- US-A1- 2014 345 936
- US-A1- 2019 123 318

## Description

### TECHNICAL FIELD

The present application claims the benefit of Korean Patent Application No. 10-2021-0122087 filed on September 13, 2021 with the Korean Intellectual Property Office.

The present invention relates to a battery module and a battery pack and a vehicle comprising the same, and more particularly, to a battery module for preventing flames from spreading outside of the battery module, and a battery pack and a vehicle comprising the same.

### BACKGROUND ART

With the technology development and growing demand for mobile devices, the demand for secondary batteries as an energy source is sharply increasing, and among secondary batteries, nickel-cadmium batteries or hydrogen ion batteries have been used, but recently, compared to nickel-based secondary batteries, lithium secondary batteries are being widely used since they have little or no memory effect so recharging can be done whenever it is convenient, the self-discharge rate is very low and the energy density is high.

A lithium secondary battery usually uses a lithium-based oxide and a carbon material for a positive electrode active material and a negative electrode active material, respectively. The lithium secondary battery includes an electrode assembly including a positive electrode plate and a negative electrode plate coated with the positive electrode active material and the negative electrode active material, respectively, with a separator interposed between the positive electrode plate and the negative electrode plate, and a packaging or a battery case in which the electrode assembly is hermetically received together with an electrolyte solution.

The lithium secondary battery includes the positive and negative electrodes and the separator and the electrolyte between them, and is classified into a Lithium Ion Battery (LIB), a Polymer Lithium Ion Battery (PLIB) or the like according to the types of the positive and negative electrode active materials. In general, the electrode of the lithium secondary battery is formed by applying the positive or negative electrode active material to a current collector of an aluminum or copper sheet, mesh, film or foil and drying. Additionally, various types of secondary batteries include cases to protect battery cells. The plurality of stacked battery cells received in the case forms a battery module, and a battery pack includes a plurality of battery modules.

In general, the battery module or the battery pack includes a connector to transmit data such as voltage to temperature to an external device. However, since the commonly connectors are manufactured by injection molding, in case that flames are generated by thermal events in the battery module, the connectors melt, causing damage.

Additionally, when the hermetic sealing structure of the coupled part between the connector and the module case is broken by flames, the flames in the battery module may spread outside of the battery module.

EP 4 216 354 A1 describes a battery module according to the preamble of independent claim 1.

### DESCRIPTION OF THE INVENTION

### Technical Problem

The present invention
is directed to providing a battery module in which a hermetic sealing structure of a coupled part between a connector and a case is maintained even when flames are generated in the battery module to prevent the flames from spreading outside of the battery module, and a battery pack and a vehicle comprising the same.

### Technical Solution

According to the invention, there is provided a battery module including a battery cell stack including a plurality of stacked battery cells; a case in which the battery cell stack is received; and a connector coupled to the case and including a flame propagation prevention member.

According to the invention, the connector includes a first body coupled to the case; the flame propagation prevention member coupled to the first body; a second body coupled to the flame propagation prevention member; and at least one connection pin configured to pass through the first body, the flame propagation prevention member and the second body.

Additionally, the flame propagation prevention member may be interposed between the first body and the second body, and may include a plate made of a material having heat resistance and resistance to fire.

Additionally, the flame propagation prevention member may include a SUS plate.

According to the invention, the connector includes a plurality of connection pins, and the flame propagation prevention member has, at a center, one through-hole through which all the plurality of connection pins passes.

Additionally, a same number of fastening holes may be disposed at a same location of the first body, the flame propagation prevention member and the second body, respectively, and the connector may be coupled to the case by a fastener member.

Additionally, the second body may have a sealing groove at a corner, and the sealing member may be coupled to the sealing groove.

Additionally, the sealing member may be made of rubber or silicone.

Meanwhile, according to another aspect of the present disclosure, there is provided a battery pack including the above-described battery module, and there is provided a vehicle including the above-described battery module.

### Advantageous Effects

According to the embodiments of the present invention, since the hermetic sealing structure of the coupled part between the connector and the case is maintained by the connector including the flame propagation prevention member even when flames are generated in the battery module, it is possible to prevent the flames from spreading outside of the battery module.

### DESCRIPTION OF DRAWINGS

FIG. 1 is a schematic exploded perspective view of a battery module according to an embodiment of the present invention.
FIG. 2 is an exploded perspective view of a connector in a battery module according to an embodiment out of the scope of the present invention.
FIG. 3 is an assembled perspective view of the connector of FIG. 2.
FIG. 4 is a diagram of FIG. 2 when viewed along the direction A.
FIG. 5 is an exploded perspective view of a connector in a battery module according to an embodiment of the present invention.

### BEST MODE

Hereinafter, an exemplary embodiment of the present invention will be described in detail with reference to the accompanying drawings. Prior to the description, it should be understood that the terms or words used in the specification and the appended claims should not be construed as being limited to general and dictionary meanings, but rather interpreted based on the meanings and concepts corresponding to the technical aspects of the present invention on the basis of the principle that the inventor is allowed to define the terms appropriately for the best explanation. Therefore, the embodiments described herein and illustrations shown in the drawings are just an exemplary embodiment of the present invention, so it should be understood that a variety of other equivalents and modifications could have been made thereto at the time that the application was filed.

The size of each element or particular parts of the element in the drawings is exaggerated or omitted or schematically illustrated for convenience and clarity of description. Accordingly, the size of each element does not necessarily reflect the actual size. When it is determined that a certain detailed description of relevant known functions or components may unnecessarily obscure the subject matter of the present disclosure, the description is omitted.

The term 'couple' or 'connect' as used herein includes not only a direct coupling or connection of an element to another element but also an indirect coupling or connection of an element to another element through a connection member.

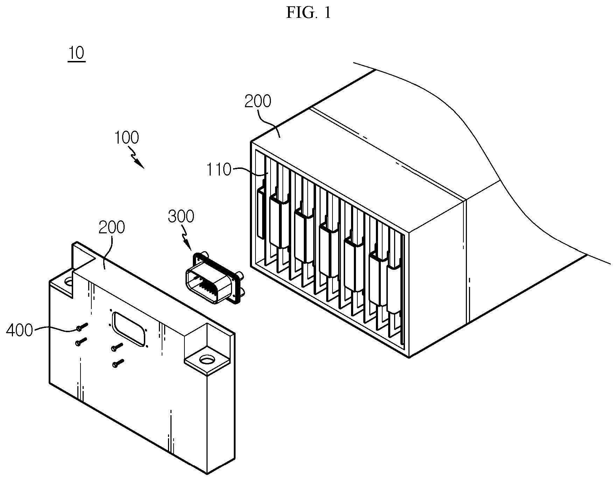

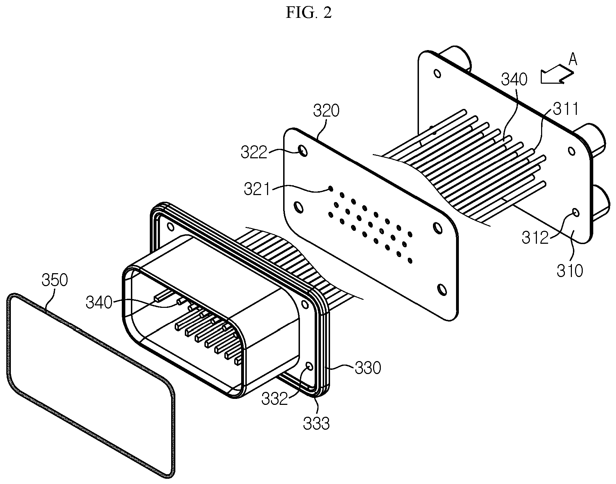

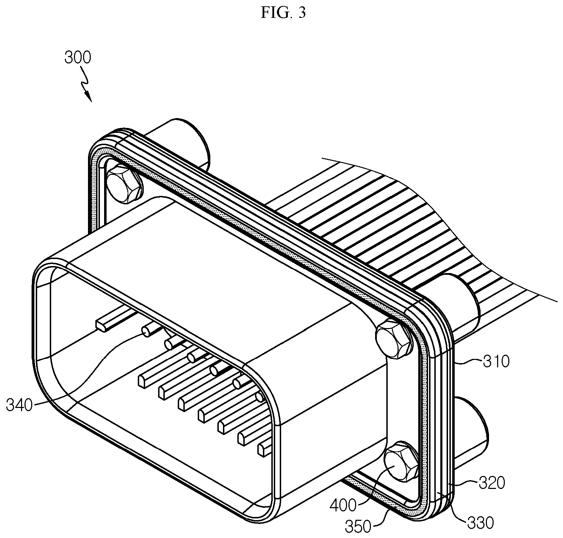

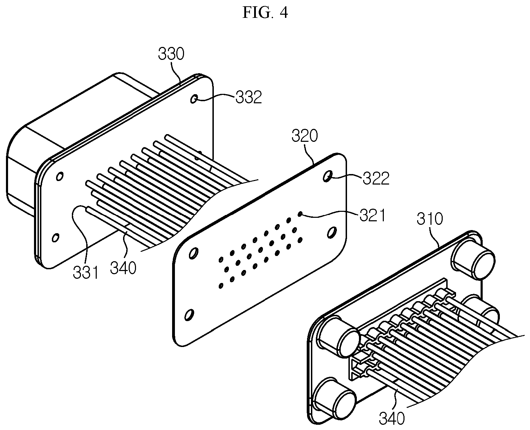

FIG. 1 is a schematic exploded perspective view of a battery module according to an embodiment of the present invention, FIG. 2 is an exploded perspective view of a connector in the battery module according to an embodiment out of the scope of the present invention, FIG. 3 is an assembled perspective view of the connector of FIG. 2, and FIG. 4 is a diagram of FIG. 2 when viewed along the direction A.

Referring to the drawings, the battery module 10 according to an embodiment of the present invention includes a battery cell stack 100, a case 200 and a connector 300.

The battery cell stack 100 includes a plurality of battery cells 110 stacked on one another, each battery cell 110 having an electrode lead. The electrode lead of the battery cell 110 is a type of terminal that is exposed for connection to an external device and may be made of a conductive material.

The electrode lead may include a positive electrode lead and a negative electrode lead. The positive electrode lead and the negative electrode lead may be placed in opposite directions along the lengthwise direction of the battery cells 110, or the positive electrode lead and the negative electrode lead may be placed in the same direction along the lengthwise direction of the battery cells 110.

The positive electrode lead and the negative electrode lead may be made of various materials, and for example, the positive electrode lead may be made of aluminum, and the negative electrode lead may be made of copper.

The electrode leads may be electrically coupled to a busbar (not shown). The battery cell 110 may have a stack structure of unit cells or bi-cells according to the battery capacity, wherein each unit cell includes positive electrode plate-separator-negative electrode plate arranged in that order, and each bi-cell includes positive electrode plate-separator-negative electrode plate-separator-positive electrode plate-separator-negative electrode plate arranged in that order.

The battery cell stack 100 includes the plurality of battery cells 110 stacked on one another. Here, the battery cells 110 may have various structures, and the plurality of battery cells 110 may be stacked in various ways.

The battery cell stack 100 may include a plurality of cartridges (not shown), each configured to receive each battery cell 110. Each cartridge (not shown) may be manufactured by injection molding of plastics, and the plurality of cartridges (not shown) having a receiving portion for receiving the battery cells 110 may be stacked on one another.

A cartridge assembly including the plurality of stacked cartridges (not shown) may include a terminal element. The terminal element is a main terminal connected to the battery cell 110. The main terminal may include a positive terminal and a negative terminal, and the terminal element may have a terminal bolt for electrical connection to an external device. The battery cells 110 may have various shapes.

Referring to FIG. 1, the case 200 accommodates the battery cell stack 100 or the cartridge assembly in which the battery cell stack 100 is received. For example, the case 200 may be configured to cover the battery cell stack 100.

The case 200 covers the battery cell stack 100 or all the plurality of cartridge assemblies to protect the battery cell stack 100 or the cartridge assemblies from external shocks or impacts.

The case 200 may be formed in a shape that conforms to the shape of the battery cell stack 100 or the cartridge assembly. For example, when the battery cell stack 100 or the cartridge assembly has a hexahedral shape, the case 200 may have a hexahedral shape that conforms to it.

For example, the case 200 may be manufactured by bending a metal plate or may be manufactured by a plastic molded product. Additionally, the case 200 may be integrally or separately formed.

The case 200 may have a hollow portion (not shown) through which the terminal element is exposed. That is, the terminal element may be electrically connected to a predetermined external component or element, and the hollow portion may prevent interference between the case 200 and the electrical connection.

The connector 300 includes various types of electrical connection components or connection elements for connection to a Battery Management System (BMS) (not shown) to provide data associated with voltage or temperature of the battery cells 110 in the module. Additionally, the connector 300 is coupled to the case 200 to transmit the data associated with voltage or temperature to an external device. Additionally, the connector 300 includes a flame propagation prevention member 320.

The connector 300 includes a first body 310, the flame propagation prevention member 320, a second body 330 and a connection pin 340.

Referring to FIGS. 1 to 4, the first body 310 is coupled to the case 200 in various ways. For example, the first body 310 may be coupled to the case 200 by a fastener member 400 (see FIGS. 1 and 3) such as bolt and a screw.

The first body 310 may have a first fastening hole 312 through which the fastener member 400 passes. Additionally, the first body 310 may have a first pin hole 311 through which the connection pin 340 passes. Additionally, the connection pin 340 may be inserted into the case 200 through the first pin hole 311 of the first body 310.

The flame propagation prevention member 320 is coupled to the first body 310. The flame propagation prevention member 320 may have a third fastening hole 322. Additionally, the flame propagation prevention member 320 may have a third pin hole 321 through which the connection pin 340 passes.

Referring to FIGS. 2 to 4, the flame propagation prevention member 320 is interposed between the first body 310 and the second body 330. Here, the flame propagation prevention member 320 may include a plate made of a material having heat resistance and resistance to fire.

For example, the flame propagation prevention member 320 may include a SUS plate. However, the material of the flame propagation prevention member 320 is not limited to SUS. Here, SUS is Steel Use Stainless and refers to stainless steel.

Stainless steel includes an alloy of iron and chrome having the nickel content of 12% or more, but is not limited thereto.

When the flame propagation prevention member 320 is made of a material having heat resistance and resistance to fire such as a SUS plate, in the event that flames are generated in the case 200, even though parts of the first body 310 may be damaged by the flames, the second body 330 is not damaged by the flames, and the flames is blocked by the SUS plate, thereby preventing the flames from spreading outside of the case 200.

That is, it is possible to prevent flames from spreading outside of the battery module 10 since the hermetic sealing structure of the coupled part between the connector 300 and the case 200 is maintained by the connector 300 including the flame propagation prevention member 320 even when the flames are generated in the battery module 10.

Referring to FIG. 2, the flame propagation prevention member 320 may have the number of pin holes through which the connection pins 340 pass, i.e., third pin holes 321 corresponding to the number of connection pins 340. Here, the number of third pin holes 321 corresponding to the number of connection pins 340 may refer to the same number of third pin holes 321 as the number of connection pins 340, but is not necessarily limited thereto, and the number of third pin holes 321 may be larger than the number of connection pins 340.

Referring to FIG. 2, since the metal connection pin 340 is inserted into the third pin hole 321, flames generated in the case 200 are blocked by the SUS plate and the connection pin 340, thereby preventing the flames from spreading outside of the case 200.

The second body 330 is coupled to the flame propagation prevention member 320. The second body 330 may have a second fastening hole 332 through which the fastener member 400 passes. Additionally, the second body 330 may have a second pin hole 331 through which the connection pin 340 passes.

The second body 330 may have a sealing groove 333 at the corner, and a sealing member 350 may be coupled to the sealing groove 333. Here, the sealing member 350 may be made of rubber or silicone to prevent gas leaks from the case 200, but is not limited thereto.

The connector 300 includes at least one connection pin 340, and the connection pin 340 passes through the first body 310, the flame propagation prevention member 320 and the second body 330. That is, the connection pin 340 passes through the first pin hole 311 of the first body 310, passes through the third pin hole 321 of the flame propagation prevention member 320, and passes through the second pin hole 331 of the second body 330.

That is, the same number of fastening holes 312, 322, 332 may be disposed at the same location of the first body 310, the flame propagation prevention member 320 and the second body 330, respectively, and the connector 300 may be coupled to the case 200 by the fastener member 400 such as a bolt or a nut. Although FIG. 2 shows four fastening holes 312, 322, 332 in the first body 310, the flame propagation prevention member 320 and the second body 330, respectively, the present disclosure is not limited thereto.

Hereinafter, the operation and effect of the battery module 10 according to the first embodiment of the present disclosure will be described with reference to the drawings.

Referring to the drawings, the connector 300 is coupled to the case 200 of the battery module 10 to transmit data associated with voltage or temperature of the battery cells 110 to an external device. Here, the connector 300 includes the flame propagation prevention member 320. The connector 300 includes the first body 310, the second body 330 and the connection pin 340, and the flame propagation prevention member 320 is interposed between the first body 310 and the second body 330.

The flame propagation prevention member 320 may include, for example, a SUS plate having heat resistance and resistance to fire. Since the flame propagation prevention member 320 having heat resistance and resistance to fire is interposed between the first body 310 and the second body 330, flames generated in the case 200 are blocked by the SUS plate and the connection pin 340, thereby preventing the flames from spreading outside of the case 200.

That is, in case that the battery module 10 according to an embodiment of the present invention includes a plurality of battery modules 10, flames generated in any one battery module 10 do not spread outside of the battery module 10, so only the battery module 10 in which the flames are generated is damaged and the flames do not propagate to the other battery module 10, and accordingly, it is possible to protect the other unaffected battery module 10 from the flames.

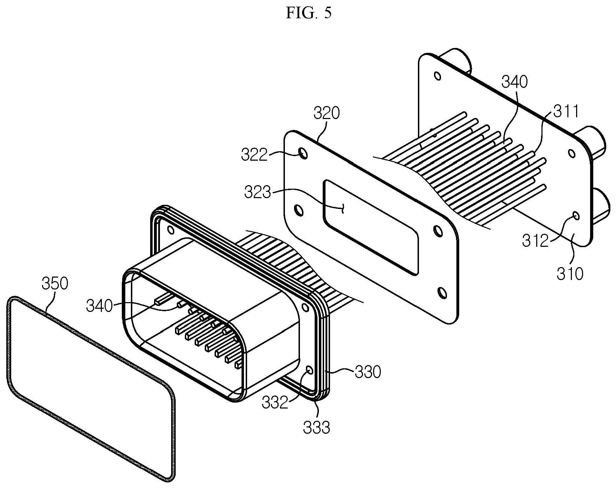

FIG. 5 is an exploded perspective view of the connector 300 in the battery module 10 according to an embodiment of the present invention.

Hereinafter, the operation and effect of the battery module 10 according to the embodiment of the present invention will be described with reference to the drawings. However, the common description with the battery module 10 according to the embodiment of figures 2-4 that does not fall within the scope of the present invention is replaced with the foregoing description.

Referring to FIG. 5, the connector 300 includes the plurality of connection pins 340, and the flame propagation prevention member 320 has, at the center, one through-hole 323 through which all the plurality of connection pins 340 passes.

That is, in the embodiment of figures 2-4 that does not fall within the scope of the present invention, the flame propagation prevention member 320 has the number of third pin holes 321 corresponding to the number of connection pins 340, while in the embodiment of the present invention, the flame propagation prevention member 320 has one through-hole 323 irrespective of the number of connection pins 340.

Additionally, all the plurality of connection pins 340 passes through one through-hole 323, and passes through the first pin hole 311 of the first body 310 and the second pin hole 331 of the second body 330.

Despite one through-hole 323 at the center of the flame propagation prevention member 320, the flame propagation prevention member 320 contacts the periphery of the first body 310 and the second body 330 and the metal connection pin 340 is disposed at the through-hole 323, so it is possible to prevent flames generated in the case 200 from spreading outside of the case 200.

Meanwhile, a battery pack (not shown) according to an embodiment of the present invention may include at least one battery module 10 according to the embodiment of the present invention as described above. Additionally, in addition to the battery module 10, the battery pack (not shown) may further include a housing accommodating the battery module 10, and various types of devices to control the charge/discharge of the battery module 10, for example, the BMS, a current sensor and a fuse.

Meanwhile, a vehicle (not shown) according to an embodiment of the present invention may include the battery module 10 or the battery pack (not shown), and the battery pack (not shown) may include the battery module 10. Additionally, the battery module 10 according to an embodiment of the present invention may be applied to the vehicle (not shown), for example, a predetermined type of vehicle (not shown) using electricity such as an electric vehicle or a hybrid electric vehicle.

### INDUSTRIAL APPLICABILITY

The present invention relates to a battery module and a battery pack and a vehicle comprising the same, and can be used especially in secondary battery related industry.

## Claims

1. A battery module (10), comprising:
a battery cell stack (100) including a plurality of stacked battery cells;
a case (200) in which the battery cell stack (100) is received; and
an electrical connector (300) coupled to the case (200);
the electrical connector (300) including a flame propagation prevention member (320),
wherein the electrical connector (300) includes:
a first body (310) coupled to the case (200);
the flame propagation prevention member (320) coupled to the first body (310);
a second body (330) coupled to the flame propagation prevention member (320); and
at least one connection pin (340) configured to pass through the first body (310), the flame propagation prevention member (320) and the second body (330),
wherein the electrical connector (300) includes a plurality of connection pins (340), the battery module being **characterized in that**
the flame propagation prevention member (320) has, at a center, one through-hole (323) through which all the plurality of connection pins (340) passes.

2. The battery module (10) according to claim 1, wherein the flame propagation prevention member (320) is interposed between the first body (310) and the second body (330), and includes a plate made of a material having heat resistance and resistance to fire.

3. The battery module (10) according to claim 2, wherein the flame propagation prevention member (320) includes a SUS plate.

4. The battery module (10) according to claim 1, wherein a same number of fastening holes (312, 322, 332) is disposed at a same location of the first body (310), the flame propagation prevention member (320) and the second body (330), respectively, and the electrical connector (300) is coupled to the case (200) by a fastener member (400).

5. The battery module (10) according to claim 1, wherein the second body (330) has a sealing groove (333) at a corner, and the sealing member (350) is coupled to the sealing groove (333).

6. The battery module (10) according to claim 5, wherein the sealing member (350) is made of rubber or silicone.

7. A battery pack comprising the battery module (10) according to any one of claims 1 to 6.

8. A vehicle comprising the battery module (10) according to any one of claims 1 to 6.

## Patentansprüche

1. Batteriemodul (10), umfassend:
einen Batteriezellstapel (100), aufweisend eine Mehrzahl von gestapelten Batteriezellen;
ein Gehäuse (200), in welchem der Batteriezellstapel (100) aufgenommen ist; und
ein an das Gehäuse (200) gekoppelter elektrischer Verbinder (300);
wobei der elektrische Verbinder (300) ein Flammausbreitungsverhinderungselement (320) aufweist,
wobei der elektrische Verbinder (300) aufweist:
einen an das Gehäuse (200) gekoppelten ersten Körper (310);
das an den ersten Körper (310) gekoppelte Flammausbreitungsverhinderungselement (320);
einen an das Flammausbreitungsverhinderungselement (320) gekoppelten zweiten Körper (330); und
zumindest einen Verbindungsstift (340), der dazu eingerichtet ist, den ersten Körper (310), das Flammausbreitungsverhinderungselement (320) und den zweiten Körper (330) zu durchdringen,
wobei der elektrischer Verbinder (300) eine Mehrzahl von Verbindungsstiften (340) aufweist, das Batteriemodul **dadurch gekennzeichnet, dass**
das Flammausbreitungsverhinderungselement (320) in einer Mitte ein Durchgangsloch (323) aufweist, welches sämtliche der Mehrzahl von Verbindungsstiften (340) durchdringen.

2. Das Batteriemodul (10) gemäß Anspruch 1, wobei das Flammausbreitungsverhinderungselement (320) zwischen dem ersten Körper (310) und dem zweiten Körper (330) eingebracht ist, und eine aus einem hitzebeständigen und feuerbeständigen Material angefertigte Platte aufweist.

3. Das Batteriemodul (10) gemäß Anspruch 2, wobei das Flammausbreitungsverhinderungselement (320) eine SUS-Platte aufweist.

4. Das Batteriemodul (10) gemäß Anspruch 1, wobei jeweils eine selbe Anzahl von Befestigungslöchern (312, 322, 332) an einer selben Stelle des ersten Körpers (310), des Flammausbreitungsverhinderungselements (320) und des zweiten Körpers (330) vorgesehen ist, und der elektrische Verbinder (300) durch ein Befestigungselement (400) an das Gehäuse (200) gekoppelt ist.

5. Das Batteriemodul (10) gemäß Anspruch 1, wobei der zweite Körper (330) eine Dichtungsrille (333) an einer Ecke aufweist, und das Dichtelement (350) an die Dichtungsrille (333) angekoppelt ist.

6. Das Batteriemodul (10) gemäß Anspruch 5, wobei das Dichtelement (350) aus Gummi oder Silikon angefertigt ist.

7. Ein Batteriepack, umfassend das Batteriemodul (10) gemäß einem der Ansprüche 1 bis 6.

8. Ein Fahrzeug, umfassend das Batteriemodul (10) gemäß einem der Ansprüche 1 bis 6.

## Revendications

1. Module de batterie (10), comprenant :
un empilement de cellules de batterie (100) comprenant une pluralité de cellules de batterie empilées ;
un boîtier (200) dans lequel est reçu l'empilement de cellules de batterie (100) ; et
un connecteur électrique (300) couplé au boîtier (200) ;
le connecteur électrique (300) comprenant un élément de prévention de la propagation de flamme (320),
le connecteur électrique (300) comprenant :
un premier corps (310) couplé au boîtier (200) ;
l'élément de prévention de la propagation de flamme (320) couplé au premier corps (310) ;
un deuxième corps (330) couplé à l'élément de prévention de la propagation de flamme (320) ; et
au moins une broche de connexion (340) configurée pour passer à travers le premier corps (310), l'élément de prévention de la propagation de flamme (320), et le deuxième corps (330),
le connecteur électrique (300) comprenant une pluralité de broches de connexion (340), le module de batterie étant **caractérisé en ce que** l'élément de prévention de la propagation de flamme (320) possède, dans un centre, un orifice traversant (323) à travers lequel passe l'intégralité de la pluralité de broches de connexion (340).

2. Module de batterie (10) selon la revendication 1, l'élément de prévention de la propagation de flamme (320) étant intercalé entre le premier corps (310) et le deuxième corps (330), et comprenant une plaque réalisée avec un matériau présentant une résistance thermique et une résistance au feu.

3. Module de batterie (10) selon la revendication 2, l'élément de prévention de la propagation de flamme (320) comprenant une plaque SUS.

4. Module de batterie (10) selon la revendication 1, un même nombre d'orifices de fixation (312, 322, 332) étant disposé dans un même emplacement du premier corps (310), de l'élément de prévention de la propagation de flamme (320) et du deuxième corps (330), respectivement, et le connecteur électrique (300) étant couplé au boîtier (200) par un élément de fixation (400).

5. Module de batterie (10) selon la revendication 1, le deuxième corps (330) possédant un rainure d'étanchéité (333) dans un coin, et l'élément d'étanchéité (350) étant couplé à la rainure d'étanchéité (333).

6. Module de batterie (10) selon la revendication 5, l'élément d'étanchéité (350) étant réalisé en caoutchouc ou en silicone.

7. Bloc-batterie comprenant le module de batterie (10) selon une quelconque des revendications 1 à 6.

8. Véhicule comprenant le module de batterie (10) selon une quelconque des revendications 1 à 6.
